(19) Europäisches Patentamt
European Patent Office
Office européen des brevets

(11) **EP 4 450 344 A1**

(12) **EUROPEAN PATENT APPLICATION**

(43) Date of publication:
**23.10.2024 Bulletin 2024/43**

(21) Application number: **23188669.8**

(22) Date of filing: **31.07.2023**

(51) International Patent Classification (IPC):
**B60T 7/12** (2006.01)  **B60T 17/22** (2006.01)
**B60T 8/172** (2006.01)

(52) Cooperative Patent Classification (CPC):
**B60T 17/22; B60T 7/12; B60T 8/172;**
B60T 2201/10; B60T 2250/04; B60T 2270/10;
B60T 2270/402; Y02T 10/72

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.04.2023  CN 202310409632**

(71) Applicant: **Xiaomi EV Technology Co., Ltd.
100176 Beijing (CN)**

(72) Inventors:
• **CUI, Jin
Beijing, 100176 (CN)**
• **GU, Wenhao
Beijing, 100176 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND DEVICE FOR CONTROLLING VEHICLE, APPARATUS, PROGRAM PRODUCT AND VEHICLE**

(57)     The present invention relates to the field of vehicle control technologies. A current actual speed of a vehicle is acquired (S101) when a failure of a main brake controller of the vehicle is detected during an automatic parking mode of the vehicle; a braking operation of the vehicle is performed (S102) in a first braking mode when the current actual speed is greater than or equal to a speed threshold, and in the first braking mode the vehicle being in an anti-lock state; a first prediction speed of the vehicle is predicted (S103) according to the current actual speed and the first braking mode; and the braking operation of the vehicle is performed (S104) in a second braking mode when the first prediction speed is less than the speed threshold.

Fig.2

## Description

### FIELD

The present invention relates to the field of vehicle control technologies, in particular to a method and device for controlling a vehicle, an apparatus, a program product and a vehicle.

### BACKGROUND

With the development of vehicle intelligent control technology, vehicles can realize automatic parking. Automatic parking means that vehicles automatically park in a parking space without manual intervention.

At present, automatic parking adopts redundant braking, which needs to increase redundant hardware and has high cost.

### SUMMARY

The present invention provides a method according to claim 1 and device according to claim 7 for controlling a vehicle, an apparatus according to claim 13, a program product according to claim 14 and a vehicle according to claim 15, to at least solve a problem of high hardware cost of an existing vehicle.

The technical solution of the present invention is as follows.

According to a first aspect of the present invention, there is provided a method for controlling a vehicle, including: acquiring a current actual speed of a vehicle in response to that the vehicle is in an automatic parking mode and a failure of a main brake controller of the vehicle is detected; performing a braking operation of the vehicle in a first braking mode in response to that the current actual speed is greater than or equal to a speed threshold, in the first braking mode the vehicle being in an anti-lock state; predicting a first prediction speed of the vehicle according to the current actual speed and the first braking mode; and performing a braking operation of the vehicle in a second braking mode in response to that the first prediction speed is less than the speed threshold.

Optionally, the method further includes: performing the braking operation of the vehicle in the second braking mode in response to that the current actual speed is less than the speed threshold.

Optionally, performing the braking operation of the vehicle in the first braking mode in response to that the current actual speed is greater than or equal to the speed threshold includes: performing the braking operation of the vehicle at a first deceleration in response to that the current actual speed is greater than or equal to the speed threshold; predicting the first prediction speed of the vehicle according to the current actual speed and the first braking mode includes: predicting the first prediction speed of the vehicle according to the current actual speed and the first deceleration; and performing the braking operation of the vehicle in a second braking mode in response to that the first prediction speed is less than the speed threshold includes: performing the braking operation of the vehicle at a second deceleration in response to that the first prediction speed is less than the speed threshold, the second deceleration being greater than the first deceleration.

Optionally, predicting the first prediction speed of the vehicle according to the current actual speed and the first deceleration includes: calculating the first prediction speed of the vehicle according to the current actual speed, the first deceleration, a current road slope and a first braking time.

Optionally, after performing the braking operation of the vehicle at a second deceleration in response to that the first prediction speed is less than the speed threshold, the method further includes: calculating a second prediction speed of the vehicle according to the first prediction speed, the second deceleration, the current road slope and a second braking time.

Optionally, after calculating the second prediction speed of the vehicle according to the first prediction speed, the second deceleration, the current road slope and the second braking time, the method further includes: performing a parking brake operation after the second prediction speed is equal to 0 for a set duration.

According to a second aspect of the present invention, there is provided a device for controlling a vehicle, including: an acquisition module configured to acquire a current actual speed of a vehicle in response to that the vehicle is in an automatic parking mode and the failure of the main brake controller of the vehicle is detected; a first performing module configured to perform a braking operation of the vehicle in a first braking mode in response to that the current actual speed is greater than or equal to the speed threshold, in the first braking mode the vehicle being in an anti-lock state; a prediction module configured to predict a first prediction speed of the vehicle according to the current actual speed and the first braking mode; and a second performing module configured to perform a braking operation of the vehicle in a second braking mode in response to that the first prediction speed is less than the speed threshold.

Optionally, the second performing module can also be configured to: perform the braking operation of the vehicle in the second braking mode in response to that the current actual speed is less than the speed threshold.

Optionally, in case of performing the braking operation of the vehicle in a first braking mode in response to that the current actual speed is greater than or equal to the speed threshold, the first performing module is configured to: perform the braking operation of the vehicle at a first deceleration in response to that the current actual speed is greater than or equal to a speed threshold; in case of predicting the first prediction speed of the vehicle according to the current actual speed and the first braking mode, the prediction module is configured to: predict the first prediction speed of the vehicle according to the current actual speed and the first deceleration; in case of performing the braking operation of the vehicle in a second braking mode in response to that the first prediction speed is less than the speed threshold, the second performing module is configured to: perform the braking operation of the vehicle at a second deceleration in response to that the first prediction speed is less than the speed threshold; the second deceleration being greater than the first deceleration.

Optionally, in case of predicting the first prediction speed of the vehicle according to the current actual speed and the first deceleration, the prediction module is configured to: calculate a first prediction speed of the vehicle according to the current actual speed, the first deceleration, a current road slope and a first braking time.

Optionally, after performing the braking operation of the vehicle at a second deceleration in response to that the first prediction speed is less than the speed threshold, the second performing module is configured to: calculate the second prediction speed of the vehicle according to the first prediction speed, the second deceleration, the current road slope and a second braking time.

After calculating the second prediction speed of the vehicle according to the first prediction speed, the second deceleration, the current road slope and the second braking time, the second performing module may be further configured to: perform a parking brake operation after the second prediction speed is equal to 0 for a set duration.

According to a third aspect of the present invention, there is provided an electronic apparatus, including: a processor; and a memory configured to store instructions executable by the processor. The processor is configured to execute the instructions to realize the steps in the above method.

According to a fourth aspect of the present invention, there is provided a non-transitory computer-readable storage medium, on which a computer program is stored, and when executed by a processor, the computer program is configured to realize the above method.

According to a fifth aspect of the present invention, there is provided a computer program product including a computer program/instructions, and when executed by a processor, the computer program/instructions is/are configured to realize the above method.

According to a sixth aspect of the present invention, there is provided a vehicle, which includes a vehicle body, a main brake controller and a redundant brake controller installed on the vehicle body. The redundant brake controller includes: a processor; and a memory configured to store instructions executable by the processor. The processor is configured to execute the instructions to realize the steps in the above method.

The technical solution provided by embodiments of the present invention has at least the following beneficial effects.

In some embodiments of the present invention, during the automatic parking mode of the vehicle, the current actual speed of the vehicle is acquired in response to that the failure of the main brake controller of the vehicle is detected; in response to that the current actual speed is greater than or equal to the speed threshold, the braking operation of the vehicle is performed in a first braking mode, and in the first braking mode the vehicle is in an anti-lock state; and a first prediction speed is predicted according to the current actual speed and the first braking mode; in response to that the first prediction speed is less than the speed threshold, the braking operation of the vehicle is performed in a second braking mode; in response to that the main brake controller fails, the speed of the vehicle can be predicted in the braking process and controlled by segmented braking, and there is no need for adding a wheel speed sensor to measure the speed of the vehicle, resulting in a low hardware cost.

It is to be understood that both the foregoing general description and the following detailed description are exemplary and explanatory only and are not restrictive of the present invention.

## BRIEF DESCRIPTION OF THE DRAWINGS

The accompanying drawings, which are incorporated in and constitute a part of this specification, illustrate embodiments consistent with the present invention and together with the description, serve to explain the principles of the present invention, and do not unduly limit the present invention.

Fig. 1 is a flowchart of a vehicle control method provided by an exemplary embodiment of the present invention;
Fig. 2 is a flowchart of another vehicle control method provided by an embodiment of the present invention;
Fig. 3 is a flowchart of another vehicle control method provided by an exemplary embodiment of the present invention;
Fig. 4 is a structural schematic diagram of a vehicle control device provided by an exemplary embodiment of the present invention; and

Fig. 5 is a schematic structural diagram of an electronic apparatus provided by an exemplary embodiment of the present invention.

## DETAILED DESCRIPTION

In order to make ordinary people in the field better understand the technical solution of the present invention, the technical solution in embodiments of the present invention will be described clearly and completely with the attached drawings.

It should be noted that the terms "first" and "second" in the description and claims of the present invention and the above drawings are used to distinguish similar objects, and are not necessarily used to describe a specific order or sequence. It should be understood that the data so used can be interchanged under appropriate circumstances, so that the embodiments of the present invention described herein can be implemented in other orders than those illustrated or described herein. The implementations described in the following exemplary embodiments do not represent all possible implementations consistent with the present invention. Rather, they are merely examples of devices and methods consistent with some aspects of the present invention as detailed in the appended claims.

It should be noted that the user information involved in the present invention includes but is not limited to: user apparatus information and user personal information; The collection, storage, use, processing, transmission, provision and disclosure of user information in the present invention all comply with the provisions of relevant laws and regulations, and do not violate public order and good customs.

At present, automatic parking adopts redundant braking, i.e. two independent braking systems: a main brake controller and a main wheel speed sensor, and a redundant braking controller and a redundant wheel speed sensor. When one controller fails, the other controller directly receives wheel speed information of the corresponding wheel speed sensor to complete automatic parking, thus the hardware cost is high.

In view of the above technical problems, in some embodiments of the present invention, during the automatic parking mode of the vehicle, the current actual speed of the vehicle is acquired when the failure of the main brake controller of the vehicle is detected; when the current actual speed is greater than or equal to the speed threshold, the braking operation of the vehicle is performed in a first braking mode, and in the first braking mode the vehicle is in an anti-lock state; and a first prediction speed is predicted according to the current actual speed and the first braking mode; when the first prediction speed is less than the speed threshold, the braking operation of the vehicle is performed in a second braking mode; when the main brake controller fails, the speed can be predicted in the braking process and controlled by segmented braking, and there is no need for adding a wheel speed sensor to measure the speed of the vehicle, resulting in the low hardware cost.

The technical solution provided by embodiments of the present invention will be described in detail below with reference to the attached drawings.

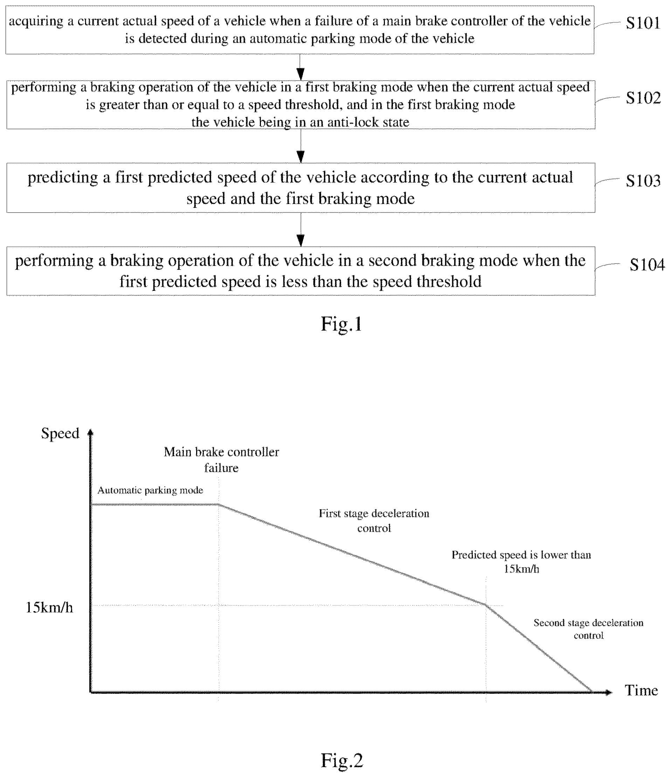

Fig. 1 is a flowchart of a vehicle control method provided by an exemplary embodiment of the present invention. As illustrated in Fig. 1, the method includes:

S101: acquiring a current actual speed of the vehicle when the failure of the main brake controller of the vehicle is detected during an automatic parking mode of the vehicle;

S 102: performing a braking operation of the vehicle in a first braking mode when the current actual speed is greater than or equal to a speed threshold, and in the first braking mode the vehicle being in an anti-lock state;

S103: predicting a first prediction speed of the vehicle according to the current actual speed and the first braking mode; and

S104: performing the braking operation of the vehicle in a second braking mode when the first prediction speed is less than the speed threshold.

In the present embodiment, an executive body of the above method can be a redundant brake controller in a vehicle. It should be noted that the disclosed embodiments do not limit the type of the redundant brake controller, which may be adjusted according to the actual situation.

In the present embodiment, the current actual speed of the vehicle is acquired when the failure of the main brake controller of the vehicle is detected during the automatic parking mode of the vehicle; when the current actual speed is greater than or equal to the speed threshold the braking operation of the vehicle in a first braking mode is performed, and in the first braking mode the vehicle is in an anti-lock state; and according to the current actual speed and the first braking mode, a first prediction speed of the vehicle is predicted; the braking operation of the vehicle is performed in a second braking mode when the first prediction speed is less than the speed threshold. When the main brake controller fails, the speed can be predicted in the braking process and controlled by segmented braking, and there is no need for adding a wheel speed sensor to measure the speed of the vehicle, resulting in the low hardware cost.

Autonomous parking means that the vehicle automatically parks in the parking space without manual intervention.

Anti-lock means that a braking force of a brake when a car brakes is automatically controlled, such that the wheel is not locked and is in a state of rolling and sliding, to ensure the maximum adhesion between the wheel and the ground.

It should be noted that the present invention does not limit the speed threshold, and the speed threshold can be adjusted according to the actual situation. For example, the speed threshold is 15 km/h.

In some embodiments of the present invention, during the automatic parking mode of the vehicle, the current actual speed is acquired when the failure of the main brake controller of the vehicle is detected. One possible implementation way is that when the vehicle detects the failure of the main brake controller of the vehicle, it obtains the current actual speed from the main brake controller.

In some embodiments of the present invention, during the automatic parking mode of the vehicle, the current actual speed is acquired when the failure of the main brake controller of the vehicle is detected, and when the current actual speed is less than the speed threshold, the braking operation of the vehicle is performed in the second braking mode, to perform redundant braking as soon as possible.

In some embodiments of the present invention, when the current actual speed is greater than or equal to the speed threshold, the braking operation of the vehicle is performed at the first deceleration; and a first prediction speed is predicted according to the current actual speed and the first deceleration. When the first prediction speed is less than the speed threshold, the braking operation of the vehicle is performed at the second deceleration. The second deceleration is greater than the first deceleration. It should be noted that embodiments of the present invention do not limit the first deceleration and the second deceleration, which can be adjusted according to the actual situation. In the present embodiment, when the current actual speed is greater than or equal to the speed threshold, the braking operation of the vehicle is performed at the first deceleration, and the vehicle is in an anti-lock state at the first deceleration. When the vehicle decelerates to the first prediction speed less than the speed threshold, the braking operation of the vehicle is performed with a larger second deceleration, to stop the vehicle urgently as soon as possible.

In the above embodiment, the first prediction speed of the vehicle is predicted according to the current actual speed and the first deceleration. One possible implementation way is to calculate the first prediction speed of the vehicle according to the current actual speed, the first deceleration, a current road slope and a first braking time. The specific calculation formula is as follows:

$$Vx\_1 = \max(0, V\_Start - (Ax\_1 - Slope\_Start) * t1);$$

$Vx\_1$ is the first prediction speed, $V\_Start$ is the current actual speed, $Ax\_1$ is the first deceleration, $Slope\_Start$ is the current road slope, and t1 is the first braking time.

It should be noted that the first braking time is a time period from a start time of braking in the first braking mode to a current time.

In the above embodiment, after the braking operation of the vehicle is performed at the second deceleration when the first prediction speed is less than the speed threshold, the second prediction speed of the vehicle is predicted. One possible implementation way is to calculate the second prediction speed according to the first prediction speed, the second deceleration, the current road slope and a second braking time. The specific calculation formula is as follows:

$$Vx\_2 = \max(0, Vx\_1 - (Ax\_2 - Slope\_Start) * t2);$$

$Vx\_2$ is the second prediction speed, $Vx\_1$ is the first prediction speed, $Ax\_2$ is the second deceleration, $Slope\_Start$ is the current road slope, and t2 is the second braking time.

It should be noted that the second braking time is a time period from a start time of braking in the second braking mode to a current time.

In some other embodiments of the present invention, when the current actual speed is greater than or equal to the speed threshold, the braking operation of the vehicle is performed at a varying deceleration. The first prediction speed of the vehicle is predicted according to the current actual speed and the varying deceleration. When the first prediction speed is less than the speed threshold, the braking operation of the vehicle is performed at the varying deceleration. It should be noted that the varying deceleration can be a gradually increasing deceleration and a gradually decreasing deceleration. In the first braking mode, the braking operation of the vehicle is performed by using the varying deceleration, and the vehicle is in an anti-lock state in the first braking mode.

It should be noted that the first prediction speed and the second prediction speed are the speeds predicted according to relevant parameters, not the actual speed of the vehicle.

In some embodiments of the present invention, after the second prediction speed is equal to 0 for a set duration, the parking brake operation is performed to complete the redundant braking of the vehicle. It should be noted that embodiments of the present invention do not limit the set duration, which can be adjusted according to the actual situation. The set duration can be, for example, 10 seconds, 15 seconds or 20 seconds.

Fig. 2 is a flowchart of another vehicle control method provided by an embodiment of the present invention. The vehicle control method according to the embodiment of the present invention will be described in detail with reference to Fig. 2.

The vehicle turns on the automatic parking function for automatic parking. When the failure of the main brake controller of the vehicle is detected, the redundant brake controller records the current actual speed and the current road slope when the failure occurs.

When the current actual speed is less than 15 km/h, the redundant brake controller performs the braking operation of the vehicle at the second deceleration, and the vehicle brakes at the maximum deceleration until it stops.

When the current actual speed is greater than or equal to 15km/h, the redundant brake controller performs a first-stage braking operation at the first deceleration. The first deceleration is a deceleration to avoid wheel locking, and the first-stage braking operation is performed at the first deceleration. During the first-stage braking, the first prediction speed of the vehicle is calculated according to the current actual speed, the first deceleration, the current road slope and the first braking time.

When the first prediction speed is less than 15km/h, the redundant braking controller performs a second-stage redundant braking at the second deceleration. The second prediction speed of the vehicle is calculated according to the first prediction speed, the second deceleration, the current road slope and the second braking time. The second deceleration is greater than the first deceleration, to brake and stop the vehicle as soon as possible.

After the second prediction speed is 0 for 10 seconds, the redundant braking controller performs the parking braking operation of the vehicle, thereby improving the parking safety and completing the redundant braking of the vehicle.

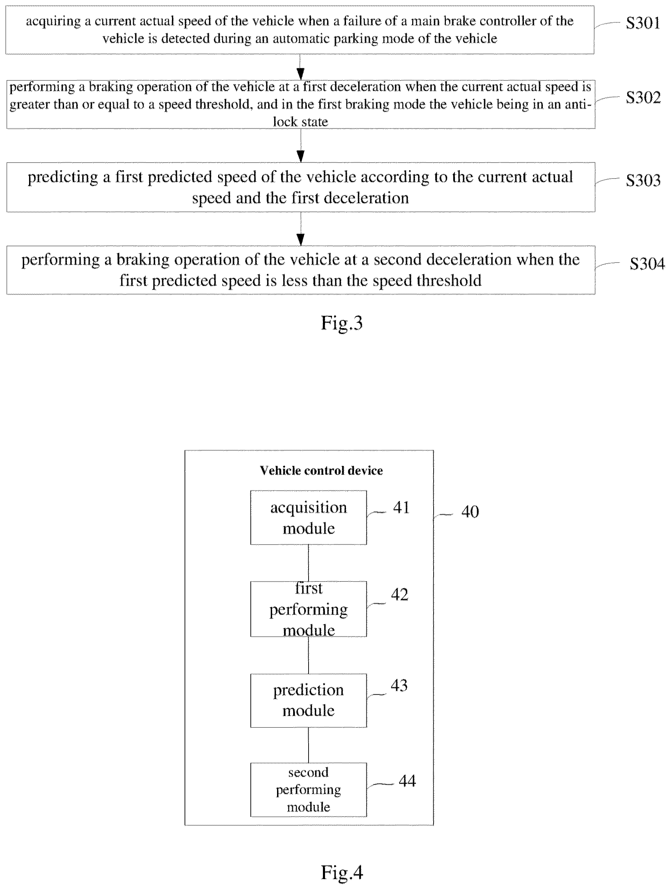

Combined with the description of above embodiments, Fig. 3 is a flowchart of another vehicle control method provided by an exemplary embodiment of the present invention. As illustrated in Fig. 3, the method includes:

S301: the current actual speed of the vehicle is acquired when the failure of the main brake controller of the vehicle is detected during automatic parking mode of a vehicle;
S302: the braking operation of the vehicle is performed at a first deceleration when the current actual speed is greater than or equal to the speed threshold, and in the first braking mode the vehicle is in an anti-lock state;
S303: a first prediction speed is predicted according to the current actual speed and the first deceleration; and
S304: the braking operation of the vehicle is performed at the second deceleration when the first prediction speed is less than the speed threshold.

In the present embodiment, the executive body of the above method can be a redundant brake controller in the vehicle. It should be noted that the disclosed embodiment does not limit the type of the redundant brake controller, which can be adjusted according to the actual situation.

In the present embodiment, for the implementation of each step of the above method, please refer to the descriptions of the corresponding parts of the above-described embodiments, which are not repeated here. The present embodiment can also achieve the beneficial effects of the corresponding parts of the above-mentioned embodiments.

In the above embodiment of a method of the present invention, the current actual speed of the vehicle is acquired when the failure of the main brake controller of the vehicle is detected during the automatic parking mode of the vehicle; the braking operation of the vehicle is performed in a first braking mode when the current actual speed is greater than or equal to the speed threshold, and in the first braking mode the vehicle is in an anti-lock state; a first prediction speed of the vehicle is predicted according to the current actual speed and the first braking mode; the braking operation of the vehicle is performed in a second braking mode when the first prediction speed is less than the speed threshold. When the main brake controller fails, the speed of the vehicle can be predicted in the braking process and controlled by segmented braking, and there is no need for adding a wheel speed sensor to measure the speed of the vehicle, resulting in a low hardware cost.

Fig. 4 is a structural schematic diagram of a vehicle control device 40 provided by an exemplary embodiment of the present invention. As illustrated in Fig. 4, the vehicle control device 40 includes an acquisition module 41, a first performing module 42, a prediction module 43 and a second performing module 44.

The acquisition module 41 is configured to acquire a current actual speed when a failure of a main brake controller of the vehicle is detected during an automatic parking mode of the vehicle.

The first performing module 42 is configured to perform a braking operation of the vehicle in a first braking mode when the current actual speed is greater than or equal to the speed threshold, and in the first braking mode the vehicle is in an anti-lock braking state.

The prediction module 43 is configured to predict the first prediction speed of the vehicle according to the current actual speed and the first braking mode.

The second performing module 44 is configured to perform the braking operation of the vehicle in a second braking mode when the first prediction speed is less than the speed threshold.

Optionally, the second performing module 44 can also be configured to: perform the braking operation of the vehicle in the second braking mode when the current actual speed is less than the speed threshold.

Optionally, in case of performing the braking operation of the vehicle in the first braking mode when the current actual speed is greater than or equal to the speed threshold, the first performing module 42 is configured to: perform the braking operation of the vehicle at the first deceleration when the current actual speed is greater than or equal to the speed threshold.

Optionally, when predicting the first prediction speed of the vehicle according to the current actual speed and the first braking mode, the prediction module 43 is configured to: predict a first prediction speed of the vehicle according to the current actual speed and the first deceleration; and in case of performing the braking operation of the vehicle in a second braking mode when the first prediction speed is less than the speed threshold, the second performing module is configured to: perform the braking operation of the vehicle at a second deceleration when the first prediction speed is less than the speed threshold; and the second deceleration is greater than the first deceleration.

Optionally, when predicting the first prediction speed of the vehicle according to the current actual speed and the first deceleration, the prediction module 43 is configured to: calculate the first prediction speed of the vehicle according to the current actual speed, the first deceleration, a current road slope and a first braking time.

Optionally, after performing the braking operation of the vehicle at the second deceleration when the first prediction speed is less than the speed threshold, the second performing module 44 may be further configured to: calculate a second prediction speed of the vehicle according to the first prediction speed, the second deceleration, the current road slope and a second braking time.

Optionally, after calculating the second prediction speed of the vehicle according to the first prediction speed, the second deceleration, the current road slope and the second braking time, the second performing module 44 may be further configured to: perform a parking brake operation after the second prediction speed is equal to 0 for a set duration.

With regard to the device in the above embodiments, the specific way in which each module performs operations has been described in detail in the embodiments of the method, and will not be described in detail here.

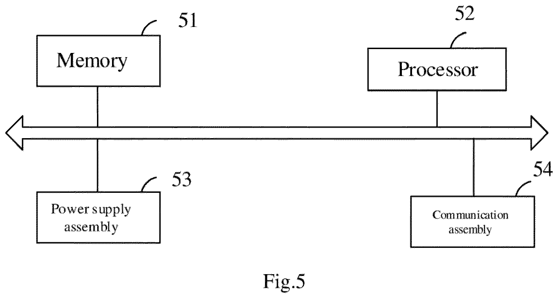

Fig. 5 is a schematic structural diagram of an electronic apparatus provided by an exemplary embodiment of the present invention. As illustrated in Fig. 5, the electronic apparatus includes a memory 51 and a processor 52. In addition, the electronic apparatus also includes a power supply assembly 53 and a communication assembly 54.

The memory 51 is configured to storing a computer program and can be configured to store various other data to support an operation on the electronic apparatus. Examples of such data include instructions for any application or method operating on the electronic apparatus.

The memory 51 can be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The communication assembly 54 is configured for data transmission with other devices.

The processor 52 can execute the computer instructions stored in the memory 51 to be configured to:

acquire a current actual speed of a vehicle when a failure of a main brake controller of the vehicle is detected during an automatic parking mode of the vehicle;
perform a braking operation of the vehicle in a first braking mode when the current actual speed is greater than or equal to the speed threshold, and in the first braking mode the vehicle being in an anti-lock state;
predict a first prediction speed of the vehicle according to the current actual speed and the first braking mode; and
perform the braking operation of the vehicle in a second braking mode when the first prediction speed is less than the speed threshold.

Optionally, the processor 52 can also be configured to perform the braking operation of the vehicle in the second braking mode when the current actual speed is less than the speed threshold.

Optionally, in case of performing the braking operation of the vehicle when the current actual speed is greater than or equal to the speed threshold, the processor 52 is configured to: perform the braking operation of the vehicle at the first deceleration when the current actual speed is greater than or equal to the speed threshold.

Predicting the first prediction speed of the vehicle according to the current actual speed and the first braking mode includes: predicting the first prediction speed of the vehicle according to the current actual speed and the first deceleration.

Performing the braking operation of the vehicle in a second braking mode when the first prediction speed is less than the speed threshold, includes: performing the braking operation of the vehicle at a second deceleration when the first prediction speed is less than the speed threshold; and the second deceleration being greater than the first deceleration.

Optionally, when predicting the first prediction speed of the vehicle according to the current actual speed and the first deceleration, the processor 52 is configured to: calculate the first prediction speed of the vehicle according to the current actual speed, the first deceleration, a current road slope and a first braking time.

Optionally, after performing the braking operation of the vehicle at the second deceleration when the first prediction speed is less than the speed threshold, the processor 52 may be further configured to: calculate a second prediction speed of the vehicle according to the first prediction speed, the second deceleration, the current road slope and a second braking time.

Optionally, after calculating the second prediction speed of the vehicle according to the first prediction speed, the second deceleration, the current road slope and the second braking time, the processor 52 can also be configured to: perform a parking brake operation after the second prediction speed is equal to 0 for a set duration.

Correspondingly, embodiments of the present invention also provide a computer-readable storage medium storing a computer program. When the computer-readable storage medium stores the computer program, and the computer program is executed by one or more processors, the one or more processors are caused to perform the steps in the method embodiment of Fig. 1.

Correspondingly, embodiments of the present invention also provide a computer program product, which includes a computer program/instruction, and the computer program/instruction is executed by a processor to perform the steps in the method embodiment of Fig. 1.

The communication assembly in Fig. 5 is configured to facilitate wired or wireless communication between the apparatus where the communication assembly is located and other apparatuses. The apparatus where the communication assembly is located can access wireless networks based on communication standards, such as WiFi, mobile communication networks, such as 2G, 3G, 4G/LTE, 5G, or their combination. In an exemplary embodiment, the communication assembly receives a broadcast signal or broadcast related information from an external broadcast management system via a broadcast channel. In an exemplary embodiment, the communication assembly further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology or other technologies.

The power supply assembly 53 in Fig. 5 provides power for various assemblies of the apparatus where the power supply assembly is located. The power supply assembly 53 can include a power management system, one or more power supplies, and other assemblies associated with generating, managing and distributing power for the apparatus where the power supply assembly is located.

The electronic apparatus further includes a display screen and an audio assembly.

The display screen includes a screen, which may include a liquid crystal display (LCD) and a touch panel (TP). If the screen includes the touch panel, the screen may be implemented as a touch screen to receive an input signal from a user. The touch panel includes one or more touch sensors to sense touch, sliding and gestures on the touch panel. The touch sensor can not only sense the boundary of the touch or sliding action, but also detect the duration and pressure related to the touch or sliding operation.

The audio assembly can be configured to output and/or input an audio signal. For example, the audio assembly includes a microphone (MIC), which is configured to receive external audio signals when the apparatus where the audio assembly is located is in an operation mode, such as call mode, recording mode and voice recognition mode. The received audio signal may be further stored in the memory or transmitted via the communication assembly. In some embodiments, the audio assembly further includes a speaker for outputting audio signals.

In embodiments of the device, the electronic apparatus and the program product disclosed above, the current actual speed of the vehicle is acquired when the failure of the main brake controller of the vehicle is detected during the automatic parking mode of the vehicle; the braking operation of the vehicle in a first braking mode is performed when the current actual speed is greater than or equal to the speed threshold, and in the first braking mode the vehicle is in an anti-lock state; a first prediction speed of the vehicle is predicted according to the current actual speed and the first braking mode; and the braking operation of the vehicle is performed in the second braking mode when the first prediction speed is less than the speed threshold. When the main brake controller fails, the speed of the vehicle can be predicted in the braking process and controlled by segmented braking, and there is no need for adding a wheel speed sensor to measure the speed of the vehicle, resulting in a low hardware cost.

It should be understood by those skilled in the art that embodiments of the present invention can be provided as methods, systems, or computer program products. Therefore, the present invention can take the form of an entirely hardware embodiment, an entirely software embodiment, or an embodiment combining software and hardware aspects. Furthermore, the present invention can take the form of a computer program product embodied on one or more computer usable storage medium (including but not limited to disk storage, CD-ROM, optical storage, etc.) containing computer usable program codes.

The present invention is described with reference to flowcharts and/or block diagrams of methods, devices (systems) and computer program products according to embodiments of the present invention. It should be understood that each flow and/or block in the flowchart and/or block diagram, and combinations of the flow and/or block in the flowchart and/or block diagram can be implemented by computer program instructions. These computer program instructions may be provided to a processor of a general-purpose computer, special-purpose computer, embedded processor or other programmable data processing apparatus to produce a machine, such that the instructions which are executed by the processor of the computer or other programmable data processing apparatus produce means for implementing the functions specified in one or more flows of the flowchart and/or one or more blocks of the block diagram.

These computer program instructions may also be stored in a computer-readable memory that can direct a computer or other programmable data processing apparatus to function in a particular manner, such that the instructions stored in the computer-readable memory produce an article of manufacture including instruction means that implement the functions specified in one or more flows of the flow chart and/or one or more blocks of the block diagram.

These computer program instructions may also be loaded onto the computer or other programmable data processing apparatus, such that a series of operational steps are performed on the computer or other programmable apparatus to produce a computer-implemented process, such that the instructions executed on the computer or other programmable apparatus provide steps for implementing the functions specified in one or more flows of the flow chart and/or one or more blocks of the block diagram.

In a typical configuration, a computing apparatus includes one or more processors (CPU), an input/output interface, a network interface, and a memory.

The memory may include non-permanent memory, random access memory (RAM) and/or nonvolatile memory in a computer-readable medium, such as read-only memory (ROM) or flash memory. The memory is an example of the computer-readable medium.

The computer-readable medium includes permanent and non-permanent, removable and non-removable medium, and can store information by any method or technology. Information can be computer-readable instructions, data structures, and modules of programs or other data. Examples of a storage medium for computers include, but not limited to phase-change random access memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), and digital versatile disc (DVD) or other optical storage, magnetic cassettes, magnetic tape magnetic disk storage or other magnetic storage devices or any other non-transmission medium, which can be configured to store information that can be accessed by computing devices. According to the definition in the present invention, the computer-readable medium does not include temporary computer-readable medium (transitory medium), such as modulated data signals and carrier waves.

It should be noted that in this paper, relational terms such as "first" and "second" are only used to distinguish one entity or operation from another entity or operation, and do not necessarily require or imply that there is any such actual relationship or order between these entities or operations. Moreover, the terms "include", "comprise" or any other variation thereof are intended to cover non-exclusive inclusion, so that a process, method, article or apparatus comprising a series of elements comprises not only those elements, but also other elements not explicitly listed or elements inherent to such process, method, article or apparatus. Without more restrictions, the element defined by the phrase "comprising a ..." does not exclude that there are other identical elements in the process, method, article or apparatus comprising the element.

**Claims**

**1.** A method for controlling a vehicle, comprising:

> acquiring (S101, S301) a current actual speed of the vehicle in response to that a failure of a main brake controller of the vehicle is detected during an automatic parking mode of the vehicle;
> performing (S 102) a braking operation of the vehicle in a first braking mode in response to that the current actual speed is greater than or equal to a speed threshold, wherein in the first braking mode the vehicle is in an anti-lock state;
> predicting (S103) a first prediction speed of the vehicle according to the current actual speed and the first braking mode; and
> performing (S 104) a braking operation of the vehicle in a second braking mode in response to that the first prediction speed is less than the speed threshold.

**2.** The method according to claim 1, further comprising:
performing the braking operation of the vehicle in the second braking mode in response to that the current actual speed is less than the speed threshold.

3. The method according to claim 1 or 2, wherein

performing (S102) the braking operation of the vehicle in the first braking mode in response to that the current actual speed is greater than or equal to the speed threshold comprises:
performing (S302) the braking operation of the vehicle at a first deceleration in response to that the current actual speed is greater than or equal to a speed threshold;
predicting (S103) the first prediction speed of the vehicle according to the current actual speed and the first braking mode comprises:
predicting (S303) the first prediction speed of the vehicle according to the current actual speed and the first deceleration; and
performing (S104) the braking operation of the vehicle in a second braking mode in response to that the first prediction speed is less than the speed threshold comprises:
performing (S304) the braking operation of the vehicle at a second deceleration in response to that the first prediction speed is less than the speed threshold, wherein the second deceleration is greater than the first deceleration.

4. The method according to claim 3, wherein predicting the first prediction speed of the vehicle according to the current actual speed and the first deceleration comprises:
calculating the first prediction speed of the vehicle according to the current actual speed, the first deceleration, a current road slope and a first braking time.

5. The method according to claim 3 or 4, wherein after performing the braking operation of the vehicle at the second deceleration in response to that the first prediction speed is less than the speed threshold, the method further comprises:
calculating a second prediction speed of the vehicle according to the first prediction speed, the second deceleration, the current road slope and a second braking time.

6. The method according to claim 5, wherein after calculating the second prediction speed of the vehicle according to the first prediction speed, the second deceleration, the current road slope and the second braking time, the method further comprises:
performing a parking brake operation after the second prediction speed is equal to 0 for a set duration.

7. A device for controlling a vehicle, comprising:

an acquisition module (41) configured to acquire a current actual speed of the vehicle in response to that a failure of a main brake controller of the vehicle is detected during an automatic parking mode of the vehicle;
a first performing module (42) configured to perform a braking operation of the vehicle in a first braking mode in response to that the current actual speed is greater than or equal to a speed threshold, wherein in the first braking mode the vehicle is in an anti-lock state;
a prediction module (43) configured to predict a first prediction speed of the vehicle according to the current actual speed and the first braking mode; and
a second performing module (44) configured to perform a braking operation of the vehicle in a second braking mode in response to that the first prediction speed is less than the speed threshold.

8. The device according to claim 7, wherein the second performing module (44) is further configured to:
perform the braking operation of the vehicle in the second braking mode in response to that the current actual speed is less than the speed threshold.

9. The device according to claim 7 or 8, wherein in case of performing the braking operation of the vehicle in the first braking mode in response to that the current actual speed is greater than or equal to the speed threshold, the first performing module (42) is configured to:
perform the braking operation of the vehicle at a first deceleration in response to that the current actual speed is greater than or equal to the speed threshold;

in case of predicting the first prediction speed of the vehicle according to the current actual speed and the first braking mode, the prediction module (43) is configured to:

predict the first prediction speed of the vehicle according to the current actual speed and the first deceleration; and in case of performing the braking operation of the vehicle in the second braking mode in response to that the first prediction speed is less than the speed threshold, the second performing module (44) is configured to: perform the braking operation of the vehicle at a second deceleration in response to that the first prediction speed is less than the speed threshold, wherein the second deceleration is greater than the first deceleration.

10. The device according to claim 9, wherein in case of predicting the first prediction speed of the vehicle according to the current actual speed and the first deceleration, the prediction module (43) is configured to:
calculate the first prediction speed of the vehicle according to the current actual speed, the first deceleration, a current road slope and a first braking time.

11. The device according to claim 9 or 10, wherein in case of performing the braking operation of the vehicle at the second deceleration in response to that the first prediction speed is less than the speed threshold, the second performing module (44) is configured to:
calculate a second prediction speed of the vehicle according to the first prediction speed, the second deceleration, the current road slope and a second braking time.

12. The device according to claim 11, wherein after calculating the second prediction speed of the vehicle according to the first prediction speed, the second deceleration, the current road slope and the second braking time, the second performing module(44) may be further configured to:
perform a parking brake operation after the second prediction speed is equal to 0 for a set duration.

13. An electronic apparatus comprising:

a processor (52); and
a memory (51) configured to store instructions executable by the processor;
wherein the processor (52) is configured to execute the instructions to realize the steps in a method according to any one of claims 1-6.

14. A computer program product comprising a computer program or instructions, wherein the computer program or the instructions is/are configured to realize a method according to any one of claims 1-6 when executed by a processor.

15. A vehicle, comprising:

a vehicle body, and
a main brake controller and a redundant brake controller installed on the vehicle body;
wherein the redundant brake controller comprises:

a processor (52); and
a memory (51) configured to store instructions executable by the processor (52);
wherein the processor (52) is configured to execute the instructions to realize the steps in a method according to any one of claims 1-6.

acquiring a current actual speed of a vehicle when a failure of a main brake controller of the vehicle is detected during an automatic parking mode of the vehicle — S101

performing a braking operation of the vehicle in a first braking mode when the current actual speed is greater than or equal to a speed threshold, and in the first braking mode the vehicle being in an anti-lock state — S102

predicting a first predicted speed of the vehicle according to the current actual speed and the first braking mode — S103

performing a braking operation of the vehicle in a second braking mode when the first predicted speed is less than the speed threshold — S104

Fig.1

Speed

Main brake controller failure

Automatic parking mode

First stage deceleration control

Predicted speed is lower than 15km/h

15km/h

Second stage deceleration control

Time

Fig.2

| acquiring a current actual speed of the vehicle when a failure of a main brake controller of the vehicle is detected during an automatic parking mode of the vehicle | S301 |

↓

| performing a braking operation of the vehicle at a first deceleration when the current actual speed is greater than or equal to a speed threshold, and in the first braking mode the vehicle being in an anti-lock state | S302 |

↓

| predicting a first predicted speed of the vehicle according to the current actual speed and the first deceleration | S303 |

↓

| performing a braking operation of the vehicle at a second deceleration when the first predicted speed is less than the speed threshold | S304 |

Fig.3

Vehicle control device

| acquisition module | — 41 | — 40 |

| first performing module | — 42 |

| prediction module | — 43 |

| second performing module | — 44 |

Fig.4

51

Memory

52

Processor

53

Power supply
assembly

54

Communication
assembly

Fig.5

Europäisches Patentamt

European Patent Office

Office européen des brevets

# EUROPEAN SEARCH REPORT

**Application Number**

EP 23 18 8669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 107 161 142 A (NINGBO SHANGZHONGXIA AUTOMATIC TRANSMISSION CO LTD) 15 September 2017 (2017-09-15) * Fig. 1-5; cl. 1 * | 1-15 | INV. B60T7/12 B60T17/22 |
| A | DE 10 2019 211384 A1 (BOSCH GMBH ROBERT [DE]) 4 February 2021 (2021-02-04) * par. [0005], [0006], [0027], [0028], [0030] * | 1-15 | ADD. B60T8/172 |
| A | DE 10 2015 216214 A1 (BOSCH GMBH ROBERT [DE]) 2 March 2017 (2017-03-02) * par. [0048], [0049] * | 1-15 | |
| A | DE 10 2019 200605 A1 (BOSCH GMBH ROBERT [DE]) 23 July 2020 (2020-07-23) * Fig. 1-3; par. [0002], [0022], [0024], [0039]-[0043]; cl. 1 * | 1-15 | |
| A | CN 211 442 273 U (ZHONGQIHONGYUAN AUTOMOBILE CO LTD) 8 September 2020 (2020-09-08) * the whole document * | 1-15 | TECHNICAL FIELDS SEARCHED (IPC) B60T |
| A | EP 3 691 945 B1 (VOLKSWAGEN AG [DE]) 25 August 2021 (2021-08-25) * par. [0008], [0011], [0012], [0014], [0016]-[0018] * | 1-15 | |

The present search report has been drawn up for all claims

| Place of search | Date of completion of the search | Examiner |
|---|---|---|
| Munich | 11 September 2024 | Kirov, Youlian |

EPO FORM 1503 03.82 (P04C01)

## ANNEX TO THE EUROPEAN SEARCH REPORT
## ON EUROPEAN PATENT APPLICATION NO.

EP 23 18 8669

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2024

| Patent document cited in search report | | Publication date | Patent family member(s) | | Publication date |
|---|---|---|---|---|---|
| CN 107161142 | A | 15-09-2017 | NONE | | |
| DE 102019211384 | A1 | 04-02-2021 | CN | 112305463 A | 02-02-2021 |
| | | | DE | 102019211384 A1 | 04-02-2021 |
| | | | US | 2021033657 A1 | 04-02-2021 |
| DE 102015216214 | A1 | 02-03-2017 | CN | 107921934 A | 17-04-2018 |
| | | | DE | 102015216214 A1 | 02-03-2017 |
| | | | JP | 6545365 B2 | 17-07-2019 |
| | | | JP | 2018523610 A | 23-08-2018 |
| | | | US | 2018251105 A1 | 06-09-2018 |
| | | | WO | 2017032544 A1 | 02-03-2017 |
| DE 102019200605 | A1 | 23-07-2020 | NONE | | |
| CN 211442273 | U | 08-09-2020 | NONE | | |
| EP 3691945 | B1 | 25-08-2021 | CN | 111148673 A | 12-05-2020 |
| | | | DE | 102017217856 A1 | 11-04-2019 |
| | | | EP | 3691945 A1 | 12-08-2020 |
| | | | ES | 2895075 T3 | 17-02-2022 |
| | | | KR | 20200051807 A | 13-05-2020 |
| | | | RU | 2741448 C1 | 26-01-2021 |
| | | | US | 2020361428 A1 | 19-11-2020 |
| | | | WO | 2019068570 A1 | 11-04-2019 |

EPO FORM P0459

For more details about this annex : see Official Journal of the European Patent Office, No. 12/82